# FASCICULE DE BREVET EUROPEEN

(11) **EP 4 143 015 B1**
(45) Date de publication et mention de la délivrance du brevet: **28.01.2026**
(21) Numéro de dépôt: 21720297.7
(22) Date de dépôt: 26.04.2021
(51) Int. Cl.: B29C 70/44, B29C 70/34, F16C 3/02, B29D 23/00, B29C 33/40, B29C 53/58, B29C 70/68, B29D 99/00, B29L 23/00, B29L 31/00

(54) **PROCÉDÉ DE FABRICATION PAR MOULAGE DE PIÈCES EN MATÉRIAU COMPOSITE ALLONGÉES ET CREUSES**
VERFAHREN ZUR HERSTELLUNG VON LÄNGLICHEN UND HOHLEN WERKSTÜCKEN AUS VERBUNDMATERIAL
METHOD FOR MANUFACTURING BY MOULDING ELONGATE AND HOLLOW WORKPIECES MADE FROM COMPOSITE MATERIAL

(30) Priorité: 30.04.2020 FR 2004290
(43) Date de publication de la demande: 08.03.2023
(73) Titulaire: NEXTEAM, 47200 Marmande (FR)
(72) Inventeur: VALEMBOIS, Guy, 31650 Lauzerville (FR)
(74) Mandataire: Cabinet Bleger-Rhein-Poupon
(86) Numéro de dépôt international: PCT/EP2021/060782
(87) Numéro de publication internationale: WO 2021/219526

(56) Documents cités:
- WO-A1-2005/105417
- FR-A1- 2 550 123
- FR-A1- 2 589 962
- US-A- 5 071 506

## Description

La présente invention concerne le domaine des pièces en matériau composite allongées et creuses, et plus particulièrement les pièces longues, tels que, non limitativement, les arbres de transmission, les bielles, les arbres à cardan, et elle a pour objet un procédé de fabrication par moulage de ces pièces

De telles structures composites sont essentiellement réalisées par création d'un tube par enroulement filamentaire sur lequel on rapporte, notamment aux extrémités, des appendices ou inserts métalliques, destinés à la réalisation d'une interface avec un autre élément.

De telles pièces hybrides, composées d'un tube équipé d'extrémités métalliques, sont décrites dans de nombreux documents, on citera par exemple le document FR 2970533, où le maintien d'un élément métallique est obtenu par enroulement filamentaire autour de pions radiaux solidaires dudit élément métallique. Outre le fait qu'une telle technique n'est pas optimale pour le maintien d'éléments et inserts, c'est surtout la partie tubulaire elle-même qui reste le point faible de ces pièces hybrides.

En effet, la fabrication de tubes composites est généralement réalisée par enroulement filamentaire classique, c'est-à-dire consistant à déposer des fibres de renfort pré-imprégnées sur un mandrin mû en rotation autour de son axe, le dépôt étant réalisé par au moins un chariot porte-fil mobile le long dudit mandrin. La vitesse de déplacement du robot et celle de rotation du mandrin définissent l'angle de dépôt. La mise en place des fibres par balayage alternatif et longitudinal du chariot dispose les fibres de manière hélicoïdale sur le mandrin en rotation, avec croisement des fibres à chaque balayage.

Cependant, on sait que la longueur d'un tissu fini est toujours inférieure à la longueur de la chaîne car le croisement des fils de chaîne avec la trame consomme de la longueur. Cette différence consiste en l'embuvage. Ainsi les fils de chaîne ondulent entre les fils de trame, et ne présentent donc pas de rectitude, ce qui diminue la résistance et la rigidité de la pièce fabriquée.

L'embuvage est donc un élément important à prendre en compte lors de la conception d'une pièce composite. Dans le cas de la fabrication d'un tube par enroulement de fibres ou de nappes de fibres, le croisement des hélicoïdes induit un embuvage des fibres, lequel génère une limitation à la performance finale du tube ainsi constitué. L'enroulement filamentaire classique conduit à un croisement du fibrage induisant un embuvage de la préforme ainsi réalisée. Cet embuvage conduit à une perte de performance du tube réalisé grâce à ce type de préforme.

L'embuvage n'est pas toutefois pas le seul inconvénient de la technique classique d'enroulement.

Un autre inconvénient, consiste en ce que l'enroulement filamentaire de la préforme se fait nécessairement avec un foisonnement du fibrage. Ce foisonnement conduit à avoir un diamètre extérieur de la préforme supérieur à celui de la pièce finale. Afin d'avoir un taux volumique de fibres correct, il convient de neutraliser ce foisonnement par un serrage de la surface extérieure du tube pendant la polymérisation, ce qui conduit à une réduction du diamètre extérieur provoquant nécessairement le plissage des fibres. Le bon serrage sous pression extérieure est donc incompatible avec une bonne rectitude locale du fibrage ce qui limite la performance du matériau constituant le tube.

Un autre inconvénient de cette technique apparaît lors de la réalisation de pièces très longues, il n'est en effet pas possible de tenir le mandrin muni de sa préforme en position horizontale sans avoir une flèche due à la gravité, la polymérisation dans cette position induit donc un défaut de rectitude de ces arbres longs réalisés de la sorte. Une alternative est de positionner le mandrin muni de sa préforme en position verticale, ce qui complique la faisabilité en particulier pour les pièces très longues.

D'autre part, la réalisation d'une pièce enroulée sur un mandrin limite les formes de la pièce par la nécessité de devoir démouler le mandrin.

Enfin, la réalisation d'un arbre de transmission impose le rajout des pièces d'extrémités via des systèmes de fixation pouvant être coûteux, lourds ou délicats en termes de justification ou de certification.

On connaît par ailleurs, un procédé de moulage qui consiste à déployer sous pression une vessie disposée intérieurement à une préforme en matériau composite. La vessie présente extérieurement la forme, en dimensions réduites, de l'empreinte de moulage, son gonflement à l'intérieur de la préforme confère à celle-ci extérieurement la forme de ladite empreinte.

Un tel procédé est décrit dans le document WO2005/105417. On notera toutefois que le procédé qui y est décrit n'est pas adapté au moulage d'objets longs, car il est difficile de maîtriser la forme et la mise en place de la vessie sur une grande longueur.

Ce procédé ne permet donc pas de résoudre tous les problèmes précédemment évoqués, notamment en ce qui concerne la grande longueur.

On notera également que l'on connaît également un procédé permettant de renforcer une pièce cylindrique en enroulant hélicoïdalement autour de celui-ci des paires de couches d'élément filamentaire sous une tension prédéterminée et en inversant le sens de l'enroulement après chaque couche. Ce procédé, décrit dans le document FR 2 589 962, ne permet pas de réaliser une préforme destinée à être moulée par expansion.

Le document US 5 071 506 A décrit également la réalisation d'un élément tubulaire par application de pression sur une membrane tubulaire pincée aux extrémités du mandrin de support.

La présente invention a pour but de remédier aux divers problèmes techniques précités, afin de permettre la réalisation d'une pièce composite creuse et longue, présentant une remarquable précision géométrique, particulièrement sa rectitude, pouvant être de forme intérieure non démoulable, ayant un taux volumique de fibres excellent tout en évitant le plissage des fibres, permettant la réalisation dans la même phase de fabrication des formes particulières matérialisant les extrémités de la pièce.

La présente invention consiste en un procédé de réalisation d'une pièce composite de forme tubulaire, qui se caractérise en ce qu'il comprend les étapes successives telles que définies dans la revendication 1.

La mise en pression permet de mettre en tension les fibres arrangées en hélicoïdes, tension qui est maintenue durant la polymérisation.

Selon une caractéristique additionnelle du procédé selon l'invention, après l'étape de découpe à la bonne longueur de la préforme initiale et avant la mise en place dans le moule, on réalise successivement plusieurs étapes intermédiaires, à savoir :
- réalisation d'une ou de plusieurs préformes secondaires sur un mandrin circulaire ou ovoïde, adaptées à pouvoir être disposées autour et/ou à l'intérieur de la préforme initiale,
- découpe à des longueurs adaptées desdites préformes secondaires,
- assemblage desdites préformes secondaires sur et/ou dans ladite préforme initiale.

Selon une caractéristique additionnelle du procédé selon l'invention, avant l'étape de mise en place de la préforme initiale dans le moule, on dispose dans le moule une ou plusieurs pièces annexes présentant une ouverture centrale axiale, dans laquelle est introduite ladite préforme initiale.

Pour pouvoir mettre en œuvre le procédé selon l'invention il a été nécessaire de concevoir un nouveau dispositif de moule lequel se caractérise en qu'il comporte :
- un corps constitué d'au moins deux parties séparables longitudinalement, permettant après polymérisation son ouverture et le démoulage de la pièce moulée, et comportant intérieurement en creux la forme à mouler,
- une membrane tubulaire apte à être introduite à l'intérieur de la préforme initiale,
- deux manchons, disposés chacun à une extrémité dudit corps, présentant une ouverture centrale permettant le passage de ladite membrane, et comportant chacun des moyens de retenue de manière étanche du bord d'une extrémité de ladite membrane tubulaire,
- deux bouchons d'extrémité, fermant lesdits manchons, et adaptés à la réalisation de l'étanchéité, et équipés chacun de moyens de connexion à des moyens externes de mise sous pression de l'intérieur de ladite membrane tubulaire.

Selon une caractéristique additionnelle du dispositif de moule, les moyens de retenue de manière étanche du bord d'une extrémité de la membrane tubulaire, consistent en une lèvre annulaire axiale s'étendant en périphérie de l'orifice de l'ouverture centrale, et du côté externe et sur laquelle est replié le bord extrême de la membrane.

Selon une autre caractéristique additionnelle du dispositif de moule, le moule est associé à un bâti rigide qui le supporte au travers d'entretoises isolantes, et il comporte sur sa longueur des cibles de contrôle géométrique permettant de détecter un éventuel défaut de rectitude, tandis que lesdites entretoises coopèrent avec des éléments de réglage aptes à la correction dudit défaut.

En pratique, la préforme est placée dans les au moins deux parties séparables longitudinalement du moule qui est ensuite refermé. On aura de préférence préalablement intercalé entre la préforme et la membrane, des accessoires de drainage tels que tissu micro perforé et feutre.

Les manchons sont ensuite solidarisés de manière étanche chacun à l'une des extrémités des au moins deux parties séparables longitudinalement assemblées, et chacune des extrémités de la membrane est fixée à un manchon, puis les bouchons ferment les extrémités du moule ainsi constitué.

Le procédé selon l'invention offre de nouvelles possibilités de réaliser de réalisation d'arbres de transmission en matériau composite. Ainsi, non limitativement, on peut envisager des arbres de comprenant à au moins l'une de ses extrémités un flasque de solidarisation, ou bien comprenant à au moins l'une de ses extrémités une forme adaptée à la coopération avec le croisillon d'un joint de Cardan, ou bien encore comprenant des pièces annexes à savoir une ou plusieurs bagues de roulement et/ou un ou plusieurs leviers et/ou un ou plusieurs pignons, et qui sont de diamètres internes différents.

Les avantages et les caractéristiques du procédé selon l'invention, ressortiront plus clairement de la description qui suit et qui se rapporte au dessin annexé, lequel en représente un mode de réalisation non limitatif.

Dans le dessin annexé:
- la figure 1 représente une vue schématique partielle illustrant une étape du procédé selon l'invention,
- la figure 2 représente une vue schématique en coupe selon un plan longitudinal d'un moule, lors d'une autre étape du procédé selon l'invention,
- la figure 3 représente la même vue schématique en coupe d'un moule, lors d'une autre étape du procédé selon l'invention,
- la figure 4 représente une vue en perspective du dispositif de moule,
- la figure 5 représente une schématique en coupe transversale du même dispositif de moule,
- la figure 6 représente une vue en perspective d'une variante du même dispositif de moule,
- la figure 7 représente une vue en perspective d'une pièce tubulaire allongée susceptible d'être obtenue par le procédé selon l'invention,
- la figure 8 représente une vue en coupe selon un plan longitudinal d'une partie du dispositif de moule , lors d'une étape du procédé pour la fabrication de la pièce de la figure 7,
- la figure 9 représente une vue du dispositif de moule, lors d'une autre étape du procédé pour la fabrication de la pièce de la figure 8,
- la figure 10 représente une vue en perspective d'une variante de la pièce tubulaire allongée susceptible d'être obtenue par le procédé selon l'invention,
- la figure 11 A représente une vue en perspective de l'extrémité d'une pièce tubulaire obtenue par le procédé selon l'invention,
- la figure 11 B représente une vue en perspective et en coupe de la même extrémité,
- la figure 12 A représente une vue en perspective de l'extrémité d'un cardan obtenu après usinage de la pièce de la figure 11,
- la figure 12 B représente une vue en perspective et en coupe de la même de extrémité de cardan,
- la figure 13 représente une vue en perspective d'une pièce complexe obtenue par le procédé selon l'invention,
- la figure 14 représente une vue schématique en coupe selon un plan longitudinal d'un moule lors d'une étape du procédé de fabrication de la pièce complexe de la figure 13,
- la figure 15 représente la même vue schématique, lors d'une autre étape du procédé de fabrication de la pièce complexe de la figure 13.

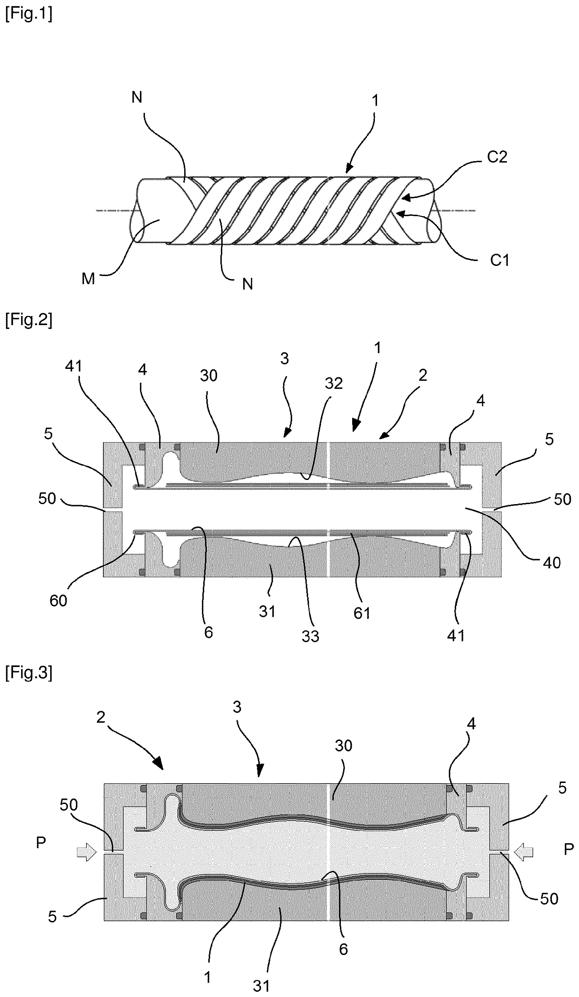

En référence à la figure 1, on peut voir la première étape du procédé de réalisation d'une pièce composite de forme tubulaire selon l'invention, à savoir la réalisation d'une préforme 1, obtenu par enroulement filamentaire sur un mandrin M.

Selon le procédé, il y a lieu de s'affranchir du problème d'embuvage, ce qui est obtenu en superposant plusieurs couches distinctes, chaque couche étant entièrement constituée soit d'un enroulement de fibres arrangées en hélicoïdes toutes parallèles, ou de nappes de fibres unidirectionnelles pré-imprégnées.

En l'occurrence sur la figure 1, la préforme 1 comporte deux couches C1 et C2 de nappes N de fibres unidirectionnelles pré-imprégnées, déposées en hélicoïdes, toutes parallèles dans une même couche, et de sens inverse d'une couche par rapport à l'autre. Il n'y a ainsi pas d'entrecroisement de nappes N dans une même couche, et donc pas d'embuvage.

En référence maintenant à la figure 2, on peut voir un moule 2, permettant de mettre en œuvre le procédé selon l'invention.

Ce moule 2 vient de l'assemblage de plusieurs éléments, dont en l'occurrence un corps principal 3, deux manchons 4, deux bouchons 5, et une membrane tubulaire 6.

Le corps principal 3 est divisé longitudinalement en, non limitativement, deux parties 30 et 31, comprenant intérieurement une empreinte, respectivement 32 et 33, permettant de reconstituer en creux la forme à mouler.

Les deux manchons 4 sont destinés à être solidarisés de manière étanche, chacun à une extrémité du corps principal, ils sont de forme annulaire et comportent au niveau de leur ouverture centrale 40, des moyens 41 d'accrochage d'un bord extrême 60 de la membrane tubulaire 6.

Dans le mode de réalisation représenté, chacun des manchons 4 du côté extérieur en périphérie de l'orifice de l'ouverture 40, une lèvre annulaire 41 sur laquelle peut être retourné le bord extrême 60 de la membrane 6, en sorte de réaliser l'étanchéité, des moyens de blocage, non représentés, assurant le maintien.

Les bouchons 5 sont destinés à être solidarisés de manière étanche chacun à un manchon 4, et ils sont percés d'un trou 50 permettant la mise sous pression du moule 2.

La membrane 6 est réalisée dans un matériau de type élastomère à grande capacité de déformation et adapté à la température de polymérisation utilisée.

Selon le procédé, après rectification de la longueur de la préforme 1, la membrane tubulaire 6 y est introduite axialement après, préférentiellement, avoir intercalé des éléments de drainage 61 tels que tissu micro perforé et feutre. Puis l'ensemble est disposé entre les parties 30 et 31 du corps 3 qui est ensuite fermé, les manchons 4 sont fixés au corps 3, les bords extrêmes 60 de la membrane y sont solidarisés et les bouchons 5 viennent fermer le moule 2.

Comme on peut le voir sur la figure 3, le moule 2 est mis en température de ramollissement de la résine d'imprégnation et sous pression P, par les deux extrémités afin que cette pression soit bien équilibrée, ce qui provoque le gonflement de la membrane 6 et la déformation de la préforme 1 qui vient au contact des empreintes 32 et 33. Puis une augmentation de la température et de la pression selon les conditions préconisées pour la polymérisation de la résine abouti à la consolidation de la pièce composite.

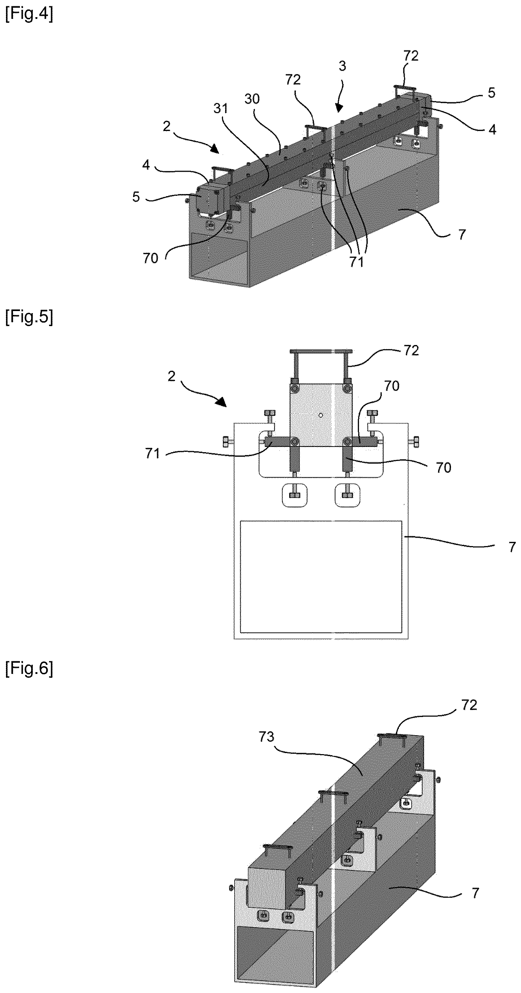

En référence maintenant aux figures 4, 5 et 6, on peut voir les caractéristiques extérieures du moule 2, nécessaire au respect de la géométrie de la pièce à fabriquer lorsque cette dernière est de grande longueur.

On sait en effet que la géométrie de la pièce est dépendante de la géométrie du mandrin qu'il est difficile de maîtriser dans le cas de grandes longueurs, celui-ci étant élancé, il est forcément flexible. Il subit donc les effets de la gravité ainsi que les contraintes générées par les dilatations thermiques relatives entre la pièce composite et le mandrin.

Le dispositif de moule permet la réalisation de pièces creuses avec un conformage de la forme extérieure des pièces à la forme intérieure du moule. Cette particularité permet le contrôle de la géométrie de la pièce pendant sa phase de polymérisation.

Comme on peut le voir sur ces figures, le moule 2 est supporté par un bâti rigide 7, par l'intermédiaire d'entretoises isolantes 70, par exemple, non limitativement, en alliage de titane ou en céramique, qui coopèrent avec des éléments de réglage 71 liés au bâti 7, tandis que des cibles 72 de contrôle géométrique sont solidaires du moule 2.

Comme on peut le voir sur la figure 6, le moule est enveloppé d'un isolant thermique 73, tout en laissant accessibles les cibles géométriques 72 ainsi que les éléments de réglage 71.

En pratique, le moule 2 incorpore des résistances chauffantes et des thermocouples qui assurent la gestion thermique, tandis que la mise en pression est réalisée par gaz comprimé.

Sous l'action de la gravité et pendant les phases de mise en pression et en température, le moule 2 se déforme. La mesure extérieure de la position des cibles permet alors de réaliser un réajustement continu de la rectitude globale du moule 2 en agissant sur éléments de réglage 71.

On notera que les moyens de mesure de la géométrie du moule peuvent être de toutes natures, mécanique, optique, par effet Hall, etc...

Les éléments de réglage 71 peuvent directement actionnés par des opérateurs pendant la polymérisation, ou par tous types d'asservissement de position permettant le réalignement du moule 2.

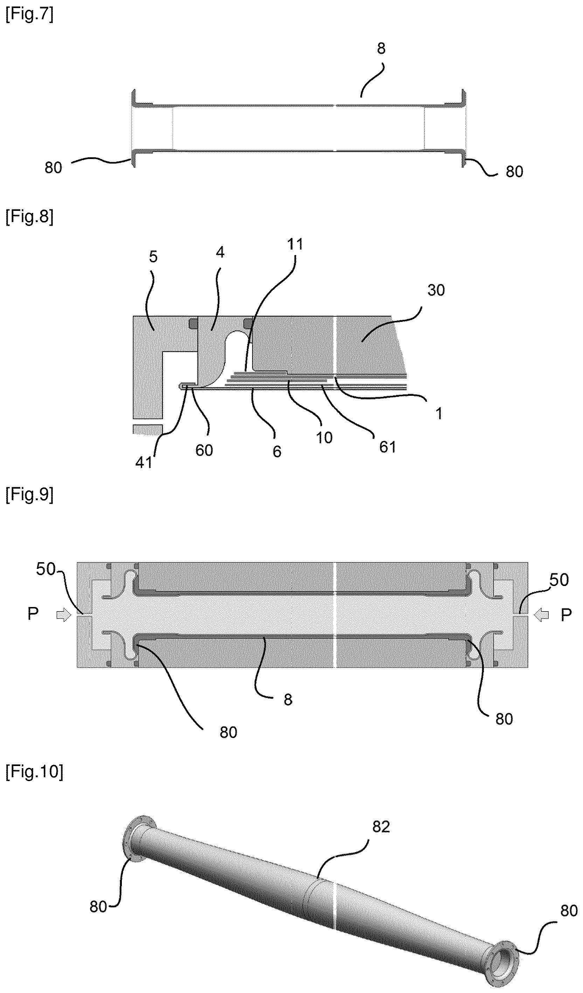

En référence maintenant aux figures 7, 8 et 9, on peut voir une variante du procédé selon l'invention, et notamment sur la figure 7, un arbre 8 muni à chacune de ses extrémités d'un flasque 80, et sur les figures 8 et 9, l'opération de moulage permettant d'obtenir ces flasques 80.

Ces arbres à flasques présentent un grand intérêt car ils permettent de ne pas utiliser de pièces métalliques de raccordement, dont la liaison avec la partie composite est toujours délicate.

Ainsi sur la figure 8, on peut voir que pour réaliser un flasque 80, on associe à la préforme initiale 1 deux préformes secondaires 10 et 11, qui se présentent sous la forme de segments de tube, l'un 10 engagé à l'intérieur de la préforme initiale 1, et l'autre 11 disposé autour de la préforme initiale 1, en sorte d'encadrer la partie extrême de la préforme initiale 1.

L'empilement de préformes secondaires 10 et 11, à l'intérieur ou autour de la préforme initiale 1, permet une augmentation locale d'épaisseur qui, en association avec des choix d'inclinaison du fibrage des préformes secondaires 10 et 11, permet d'optimiser la résistance des flasques 80.

D'autre part, la longueur de la préforme initiale 1, et l'emplacement de l'empilement de préformes secondaires 10 et 11, est en adéquation avec l'empreinte du moule 2, en sorte cet empilement déborde partiellement la partie tubulaire de cette empreinte, et que la membrane 6, sous l'effet de la pression, repousse la préforme vers l'extérieur pour former le flasque 80. A cet effet, le moule 2 présente une empreinte adaptée, à savoir des dégagements entre le corps 3 et les manchons 4, permettant une répartition judicieuse de l'augmentation d'épaisseur vers l'extérieur comme vers l'intérieur afin d'optimiser la résistance de l'extrémité ainsi constituée.

La figure 10 montre un autre intérêt de la présente invention, à savoir de permettre une augmentation des dimensions centrales d'un arbre de transmission 82, afin d'augmenter sa rigidité de torsion et surtout de flexion ce qui permet d'augmenter significativement sa vitesse critique de rotation.

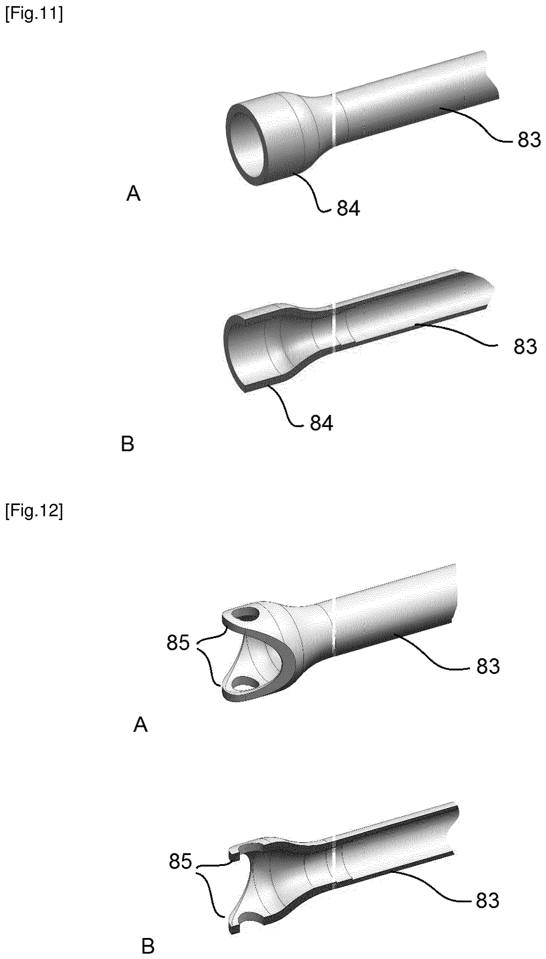

Les figures 11A, 11B, 12A et 12B montrent la possibilité au travers du procédé selon l'invention, de réaliser aisément un arbre de transmission 83 dont l'extrémité présente une forme adaptée à la coopération avec le croisillon d'un joint de Cardan.

Comme pour la réalisation d'un flasque vue précédemment, un empilement de préformes secondaires à l'intérieur et/ou autour de la partie extrême de la préforme initiale permet une augmentation locale d'épaisseur.

On notera que le choix des inclinaisons du fibrage des préformes secondaires permet d'optimiser la résistance des extrémités.

La mise en pression de la membrane, associée à une montée à la température de ramollissement de la résine, ainsi que la forme intérieure du moule, permet l'élargissement de l'extrémité 84, sans réduction de l'épaisseur de la paroi, comme cela est visible sur les figures 12A et 12 B.

Après polymérisation, l'usinage de l'extrémité 85 ainsi obtenue permet la réalisation de la fourche 85 nécessaire à la matérialisation de la partie du joint de Cardan.

On notera, que selon la même approche, le procédé permet de réaliser des formes d'extrémité de pièce, conformes à des chapes, permettant ainsi la réalisation de bielles.

La présente invention permet d'utiliser la capacité de déformation de la préforme dans le moule pour réaliser des pièces composites globalement de forme longue et plus ou moins de révolution coopérant avec des pièces annexes.

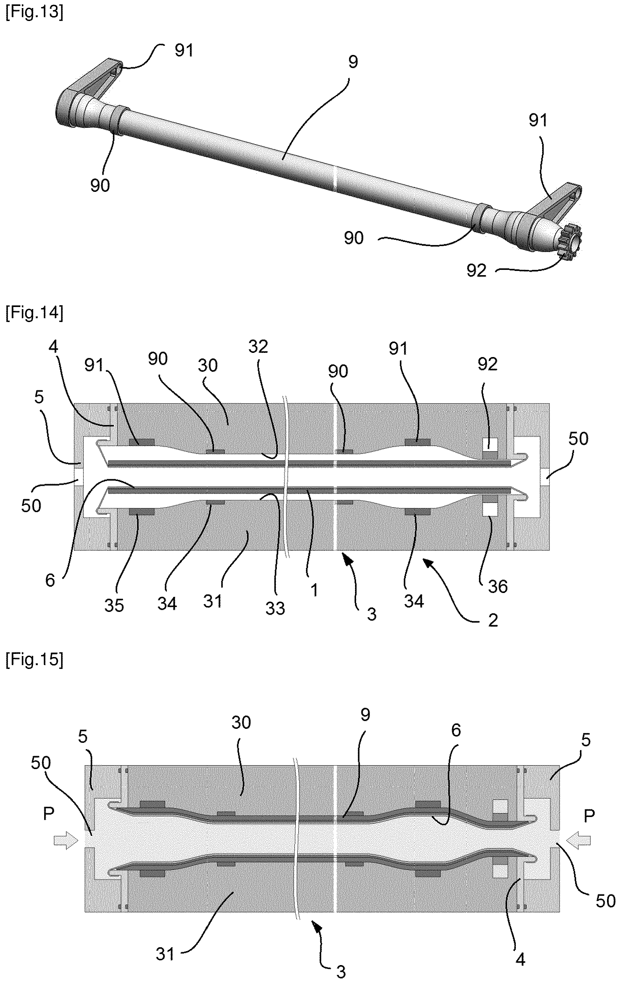

Sans que cela soit limitatif, la figure 13 représente un arbre 9 réalisé au travers du procédé selon l'invention, ayant la particularité de présenter des bagues de roulement 90, des leviers 91 et un pignon 92, et qui sont de diamètres internes différents.

Les figures 14 et 15 représentent le moule 2 permettant la réalisation de l'arbre 9, et dont les empreintes 32 et 33 sont adaptées à recevoir les bagues de roulement 90, les leviers 91 et le pignon 92, et qui à cet effet comportent des cavités respectivement 34, 35 et 36.

En pratique, les bagues de roulement 90, les leviers 91 et le pignon 92, sont placés dans la partie 31 du corps 3, puis la préforme initiale avec ses éventuelles préforme secondaires est enfilée à l'intérieur des bagues de roulement 90, des leviers 91 et du pignon 92, et la partie 30 du corps 3 est posée par-dessus.

Il est à noter que les pièces annexes peuvent présenter des formes intérieures susceptibles de favoriser leur assemblage à la partie composite, à savoir :
- des formes de révolution présentant une rugosité suffisamment grande pour créer des micros obstacles s'opposant au glissement des fibres composites qui s'y seront inclues lors de la mise en pression suivie de la phase de polymérisation ,
- des formes non de révolution permettant de s'opposer à tout mouvement relatif entre les pièces annexes et la partie composite.

## Revendications

1. Procédé de réalisation d'une pièce composite de forme tubulaire, **caractérisé en ce qu'**il comprend les étapes successives suivantes:
- réalisation d'une préforme initiale (1) sur un mandrin circulaire ou ovoïde (M) en s'affranchissant de créer un embuvage, en superposant plusieurs couches distinctes (C1, C2), chaque couche étant entièrement constituée soit d'un enroulement de fibres arrangées en hélicoïdes toutes parallèles, soit du roulage d'une ou de plusieurs nappes (N) de fibres unidirectionnelles pré-imprégnées correctement orientées de manière hélicoïdale, tandis que les hélicoïdes d'une couche (C1, C2) sont d'angle d'hélice inverse de celui des hélicoïdes de la ou les couches adjacentes,
- découpe à la bonne longueur de ladite préforme initiale (1),
- introduction axialement dans ladite préforme (1) d'une membrane tubulaire (6), après intercalement entre ladite membrane (6) et ladite préforme (1) de moyens intérieurs de drainage (61),
- disposition dans un moule femelle (2) de l'ensemble, entre les parties (30, 31) du corps (3) dudit moule femelle (2),
- solidarisation des bords extrêmes (60) de la membrane tubulaire (6) à deux manchons (4) destinés à être solidarisés de manière étanche, chacun à une extrémité du corps (3) dudit moule (2),
- réalisation d'une étanchéité entre lesdits bords extrêmes (60) et ledit moule femelle (2), par une solidarisation, de manière étanche, sur chacun des deux manchons (4), de bouchons d'extrémité (5) percés d'un trou (50) permettant la mise sous pression du moule (2),
- mise en température de ramollissement de la résine d'imprégnation et mise en pression par le gonflement, par les deux extrémités de ladite membrane tubulaire (6), jusqu'à déformation de l'assemblage de la préforme par augmentation diamétrale de ses dimensions, jusqu'à épouser la forme femelle du moule (2),
- mise en température et en pression de polymérisation de la résine d'imprégnation afin de permettre la consolidation de la pièce (8 ; 83 ; 9), sa forme extérieure devenant conforme à la forme intérieure du moule (2),
- ouverture du moule (2) et démoulage de la pièce (8 ; 83 ; 9),
- usinage des formes finales de la pièce composite (8 ; 83 ; 9).

2. Procédé selon la revendication 1, **caractérisé en ce qu'**après l'étape de découpe à la bonne longueur de la préforme initiale (1) et avant la mise en place dans le moule, on réalise successivement plusieurs étapes intermédiaires, à savoir :
- réalisation d'une ou de plusieurs préformes secondaires (10, 11) sur un mandrin circulaire ou ovoïde, adaptées à pouvoir être disposées autour et/ou à l'intérieur de la préforme initiale (1),
- découpe à des longueurs adaptées desdites préformes secondaires (10, 11),
- assemblage desdites préformes secondaires (10, 11) sur et/ou dans ladite préforme initiale (1).

3. Procédé selon la revendication 1 ou la revendication 2, **caractérisé en ce qu'**avant l'étape de mise en place de la préforme initiale (1) dans le moule (2), on dispose dans le moule (2) une ou plusieurs pièces annexes (90, 91, 92) présentant une ouverture centrale axiale, dans laquelle est introduite ladite préforme initiale (1).

## Patentansprüche

1. Verfahren zur Herstellung eines röhrenförmigen Verbundstücks, **dadurch gekennzeichnet, dass** es die folgenden aufeinanderfolgenden Schritte umfasst:
- Herstellung einer Ausgangsvorform (1) auf einem kreisförmigen oder ovalen Dorn (M), ohne eine Umhüllung zu bilden, durch Übereinanderlegen mehrerer unterschiedlicher Schichten (C1, C2), wobei jede Schicht entweder vollständig aus einer Wicklung von parallel angeordneten spir Fasern oder aus einem Aufrollen einer oder mehrerer Lagen (N) von vorimprägnierten, unidirektionalen Fasern besteht, die korrekt helikoidal ausgerichtet sind, während die Helikoide einer Schicht (C1, C2) einen Helixwinkel aufweisen, der dem der Helikoide der benachbarten Schicht(en) entgegengesetzt ist,
- Zuschneiden der Ausgangsvorform (1) auf die richtige Länge,
- axiales Einführen einer röhrenförmigen Membran (6) in die Vorform (1), nachdem zwischen der Membran (6) und der Vorform (1) innere Drainagemittel (61) angeordnet wurden,
- Anordnung des Ensembles in einer weiblichen Form (2), zwischen den Teilen (30, 31) des Körpers (3) der weiblichen Form (2),
- Verbinden der Endkanten (60) der röhrenförmigen Membran (6) mit zwei Muffen (4), die dazu bestimmt sind, jeweils dichtend mit einem Ende des Körpers (3) der Form (2) verbunden zu werden,
- Herstellung einer Abdichtung zwischen den Endkanten (60) und der weiblichen Form (2) durch dichtes Verbinden von Endkappen (5) mit einem Loch (50), das die Druckbeaufschlagung der Form (2) ermöglicht, an jeder der beiden Muffen (4),
- Erwärmung des Imprägnierharzes auf seine Erweichungstemperatur und Druckbeaufschlagung durch Quellung an beiden Enden der röhrenförmigen Membran (6), bis sich die Vorformanordnung durch eine diametrale Vergrößerung ihrer Abmessungen verformt und sich der weiblichen Form der Form (2) anpasst,
- Erwärmung und Druckbeaufschlagung zur Polymerisation des Imprägnierharzes, um die Verfestigung des Stücks (8; 83; 9) zu ermöglichen und seine Außenform an die Innenform der Form (2) anzupassen,
- Öffnen der Form (2) und Entformen des Stücks (8; 83; 9),
- Bearbeiten der endgültigen Formen des Verbundstücks (8; 83; 9).

2. Verfahren nach Anspruch 1, **dadurch gekennzeichnet, dass** nach dem Schritt des Zuschneidens der Ausgangsvorform (1) auf die richtige Länge und vor dem Einlegen in die Form nacheinander mehrere Zwischenschritte durchgeführt werden, nämlich:
- Herstellung einer oder mehrerer sekundärer Vorformen (10, 11) auf einem kreisförmigen oder ovalen Dorn, die so beschaffen sind, dass sie um und/oder in die Ausgangsvorform (1) angeordnet werden können,
- Zuschneiden der sekundären Vorformen (10, 11) auf geeignete Längen,
- Anordnen der sekundären Vorformen (10, 11) auf und/oder in der Ausgangsvorform (1).

3. Verfahren nach Anspruch 1 oder Anspruch 2, **dadurch gekennzeichnet, dass** vor dem Schritt des Einlegens der Ausgangsvorform (1) in die Form (2) ein oder mehrere Hilfsstücke (90, 91, 92), die eine zentrale axiale Öffnung aufweisen, in die Form (2) eingelegt werden, in die die Ausgangsvorform (1) eingebracht wird.

## Claims

1. Method for producing a tubular-shaped composite part, **characterised in that** it comprises the following successive steps:
- producing an initial preform (1) on a circular or ovoid mandrel (M) without creating shrinking, by superimposing a plurality of distinct layers (C1, C2), each layer being entirely composed either of a winding of fibres arranged in parallel helices, or of rolling one or more plies (N) of unidirectional pre-impregnated fibres correctly oriented in a helical manner, while the helices of one layer (C1, C2) have a helix angle that is the inverse of that of the helices of the adjacent layer(s),
- cutting said initial preform (1) to the correct length,
- axially introducing into said preform (1) a tubular membrane (6), after interposing internal drainage means (61) between said membrane (6) and said preform (1),
- positioning the assembly in a female mould (2), between the parts (30, 31) of the body (3) of said female mould (2),
- securing the end edges (60) of the tubular membrane (6) to two sleeves (4) designed to be secured in a sealed manner, each at one end of the body (3) of said mould (2),
- producing a seal between said end edges (60) and said female mould (2) by securely attaching, in a sealed manner, end caps (5) to each of the two sleeves (4), said end caps being pierced with a hole (50) allowing the mould (2) to be pressurised,
- heating the impregnation resin to its softening temperature and applying pressure through swelling at both ends of said tubular membrane (6), until the preform assembly is deformed by a diametrical increase in its dimensions, conforming to the female shape of the mould (2),
- heating and pressurising the impregnation resin for polymerisation to enable the part (8; 83; 9) to consolidate, with its outer shape conforming to the inner shape of the mould (2),
- opening the mould (2) and removing the part (8; 83; 9),
- machining the final shapes of the composite part (8; 83; 9).

2. Method according to Claim 1, **characterised in that** after the step of cutting the initial preform (1) to the correct length and before placing it in the mould, a plurality of intermediate steps are carried out succesively, namely:
- producing one or more secondary preforms (10, 11) on a circular or ovoid mandrel, designed to be arranged around and/or inside the initial preform (1),
- cutting said secondary preforms (10, 11) to appropriate lengths,
- assembling said secondary preforms (10, 11) on and/or in said initial preform (1).

3. Method according to Claim 1 or claim 2, **characterised in that**, prior to the step of placing the initial preform (1) in the mould (2), one or more ancillary parts (90, 91, 92) with a central axial opening are arranged in the mould (2), into which said initial preform (1) is inserted.
